# EUROPÄISCHE PATENTSCHRIFT

(11) **EP 0 433 529 B1**
(45) Veröffentlichungstag und Bekanntmachung des Hinweises auf die Patenterteilung: **16.06.1993**
(21) Anmeldenummer: 90102496.8
(22) Anmeldetag: 08.02.1990
(51) Int. Cl.: B65G 13/06

(54) **Antriebsrolleneinheit**
Driving roller unit
Unité de galets de propulsion

(30) Priorität: 17.11.1989 DE 3938338
(43) Veröffentlichungstag der Anmeldung: 26.06.1991
(73) Patentinhaber: BAVARIA CARGO TECHNOLOGIE GMBH, D-80999 München (DE)
(72) Erfinder: Huber, Thomas, D-8127 Iffeldorf (DE)
(74) Vertreter: Bohnenberger, Johannes, Dr.

(56) Entgegenhaltungen:
- DE-A- 3 724 126
- DE-C- 882 373
- MECHANICAL ENGINEERING, Band 109, Nr. 4, April 1987, Seiten 40-42, New York, US; "Conveyor components keep rolling along"

## Beschreibung

Die Erfindung betrifft eine Antriebsrolleneinheit zum Antrieb von Gegenständen auf einer Förderbahn, mit einer von einer Elektromotoranordnung über ein Planetengetriebe und eine Getriebeanordnung drehend antreibbaren Antriebsrolle, welche drehbar auf einem Führungskörper gelagert ist, mittels dem sie bezüglich einer Basis zwischen einer unteren Ruhestellung und einer oberen Antriebsstellung, in der sie mit der Unterseite des anzutreibenden Gegenstands in Eingriff steht, bewegbar ist, wobei das Kronenrad des Planetengetriebes mit dem Führungskörper gekoppelt ist und wobei die Getriebeanordnung ein von der Elektromotoranordnung antreibbares Antriebszahnrad umfaßt, dessen Drehachse bezüglich der Basis ortsfest angeordnet ist, wobei die Abtriebswelle eines Planetenträgers des Planetengetriebes mit dem Antriebszahnrad gekoppelt ist, wobei ferner die Antriebsrolle im wesentlichen als hohler Kreiszylinder ausgebildet ist und die Elektromotoranordnung, der Führungskörper, das Planetengetriebe und die Getriebanordnung im Inneren der hohlzylindrischen Antriebsrolle angeordnet sind, wobei der Führungskörper kreiszylindrische Außenumfangsflächenbereiche aufweist, die exzentrisch zur Drehachse des Antriebszahnrads angeordnet sind und auf denen die Antriebsrolle konzentrisch gelagert ist, wobei an der Innenseite der hohlzylindrischen Antriebsrolle ein zur ihr konzentrischer Innenzahnkranz drehfest angebracht ist, welcher mit dem dazu exzentrischen Antriebszahnrad kämmt und von diesem gleichsinnig angetrieben ist, und wobei die Elektromotoranordnung ein erstes und ein zweites Motorelement besitzt, von denen das eine konzentrisch innerhalb des anderen angeordnet ist, die relativ zueinander drehbar sind und zwischen denen im Betrieb das Drehmoment der Elektromotoranordnung wirkt, wobei das zweite Motorelement bezüglich der Basis, der Antriebsrolle und des Führungskörpers drehbar gelagert und mit einem Sonnenrad des Planetengetriebes gekoppelt ist.

Eine Antriebsrolleneinheit der vorstehend genannten Art ist bereits aus der DE-A-37 24 126 bekannt. Bei dieser Antriebsrolleneinheit ist der die Feldwicklung enthaltende Stator der Elektromotoranordnung starr und drehfest mit einem Statorgehäuse verbunden, das als Führungskörper dient, dessen kreiszylindrische Außenumfangsfläche exzentrisch zur Drehachse des Antriebszahnrads angeordnet ist. Bei dieser Ausgestaltung verharrt beim Einschalten der Motoranordnung der im Inneren des Stators angeordnete Rotor wegen seiner Eigenträgheit zunächst im Stillstand, so daß das Motordrehmoment die Statoranordnung und damit den durch ihr Gehäuse gebildeten Führungskörper um die bezüglich der Basis ortsfeste Drehachse des Antrielbszahnrades dreht. Dadurch wird wegen der zur Drehachse des Antriebszahnrades exzentrischen Ausbildung des Führungskörpers die darauf gelagerte Antriebsrolle aus ihrer unteren Ruhestellung in die obere Arbeitsstellung bewegt, in der sie zur Anlage am Boden des darüber befindlichen zu fördernden Gegenstands gelangt.

Problematisch ist bei einer derartigen Ausgestaltung, daß sich die die Feldwicklung enthaltende Statoranordnung im Betrieb der Antriebsrolleneinheit zumindest über einen begrenzten Drehwinkel drehen muß. Zur Stromzuführung an die Feldwicklung der Statoranordnung mußte daher eine recht aufwendig gestaltete Schleifringanordnung vorgesehen werden. Eine derartige Schleifringanordnung kompliziert nicht nur den Aufbau der Antriebsrolleneinheit sondern sie neigt auch zur Verschmutzung und zur Störungsanfälligkeit, so daß kurze Wartungsintervalle erforderlich sind.

Eine weitere Antriebsrolleneinheit ist aus der US-A-3 698 539 bekannt. Diese bekannte Einheit weist einen am Boden des Frachtraums zu befestigenden Grundrahmen und ein an einem Ende schwenkbar am Grundrahmen gelagertes Lagergestell auf, das in der Nähe der Schwenkachse einen Motor trägt und im Abstand zur Schwenkachse eine drehbar, jedoch bezüglich des Lagergestells ortsfest gelagerte Antriebsrolle, sowie eine mit dem freien Ende des Lagergestells verbundene Nockensteueranordnung, mittels der das Lagergestell bezüglich des Grundrahmens aus der Ruhestellung in die Arbeitsstellung verschwenkbar ist. Die Abtriebswelle des Motors ist über einen Getriebezug mit dem Eingang eines Planetengetriebes gekoppelt, dessen einer Ausgang über eine Getriebeanordnung mit der Antriebswelle der Antriebsrolle gekoppelt ist, während der andere Ausgang des Planetengetriebes die Nockensteuereinheit antreibt.

Im Ruhezustand liegt das Lagergestell auf dem Grundrahmen auf, so daß die Antriebsrolle abgesenkt im Abstand zum Boden eines darüber auf einer Rollförderbahn herangeführten Frachtbehälters steht. Um den Frachtbehälter auf der Rollenbahn in Bewegung zu setzen, wird zunächst der Motor eingeschaltet, der den Eingang des Planetengetriebes antreibt. Zu diesem Zeitpunkt wird die Antriebsrolle mittels einer Rutschkupplung mit einem vorbestimmten Bremsdrehmoment gegen Drehung festgehalten, so daß das Antriebsmoment des Motors zwangsläufig über den anderen Ausgang des Planetengetriebes auf die Nockensteuereinheit einwirkt, die dadurch mit ihren Nocken, die sich an dem Grundrahmen abstützen, das Lagergestell nach oben in die Arbeitsstellung schwenkt, bis die Antriebsrolle in Eingriff mit der Unterseite des Bodens des Frachtbehälters gelangt. Wegen des Gewichts des Frachtbehälters wird dadurch die Bewegung der Nockensteuereinheit blockiert und die Antriebsrolle wird gegen den Behälterboden gedrückt. Dadurch aber wird auch der die Nockensteuereinheit treibende Ausgang des Planetengetriebes blockiert, so daß der die Antriebsrolle antreibende andere Ausgang des Planetengetriebes an die Antriebsrolle ein Bremsmoment überträgt, das das Bremsdrehmoment der Rutschkupplung überwindet, so daß die an dem Behälterboden angedrückte Antriebsrolle sich zu drehen beginnt und der Behälter in einer von der Drehrichtung des Antriebsmotors abhängigen Richtung vorwärts bewegt wird.

Problematisch ist dabei in der Praxis, daß die gesamte Getriebeanordnung vom Motor zur Antriebsrolle einerseits und zur Nockensteuerung andererseits sehr aufwendig gestaltet ist und viele Teile aufweist. Überdies ist eine Nockensteuerung erforderlich, so daß der Gesamtaufbau eine große Anzahl von mechanisch bewegten Teilen enthält. Dadurch ergeben sich nicht nur bei der Herstellung hohe Kosten, sondern auch ein im Flugzeugbau höchst unerwünschtes hohes Gewicht und eine große Bauform. Zudem führt die große Anzahl von zueinander bewegten Teilen zu einer unerwünschten Verschleißanfälligkeit und es sind kurze Wartungsintervalle erforderlich, um die im Flugzeugbetrieb geforderte hohe Zuverlässigkeit zu gewährleisten.

Überdies wird bei dieser Antriebsrolleneinheit als Rutschkupplung eine sogenannte Fluid-Reibungskupplung verwendet, deren Betriebsverhalten sehr temperaturabhängig ist. Aufgrund der im Betrieb im Frachtraum eines Flugzeugs auftretenden hohen Temperaturunterschiede ist es daher erforderlich, das maximale Drehmoment der Rutschkupplung so hoch zu wählen, daß auch bei den ungünstigsten Temperaturen der erforderliche Minimalwert nicht unterschritten wird. Dadurch aber ergeben sich hohe Kraftspitzen beim Einsetzen der Drehung der an den Behälterboden angedrückten Antriebsrolle, welche auf die Bodenstruktur des Flugzeug-Frachtraumes einwirken. Dies ist in der Praxis außerordentlich unerwünscht, da bestimmte Grenzbelastungen der Bodenstruktur nicht überschritten werden dürfen und überdies Stoßbelastungen äußerst unerwünscht sind.

Vor allem aber weist die bekannte Antriebsrolleneinheit eine recht große Bauform auf und die einzelnen Bauteile liegen mehr oder weniger ungeschützt nebeneinander, so daß im Betrieb nicht nur mit Verschmutzungen und dadurch hervorgerufenen Betriebsstörungen zu rechnen ist, sondern auch mit Beschädigungen durch eingedrungene Gegenstände oder durch direkte Krafteinwirkung.

Eine von Aufbau und Betriebsweise ähnliche Anriebsrolleneinheit ist ferner aus EP-B1-0 149 658 bekannt, bei der neben großer Bauform ebenfalls im Betrieb Probleme durch eindringende Fremdkörper oder durch Gewalteinwirkung auftreten können.

Die der Erfindung zugrundeliegende Aufgabe besteht somit darin, eine Antriebsrolleneinheit der eingangs genannten Gattung zu schaffen, deren Zuverlässigkeit verbessert und deren konstruktiver Aufbau vereinfacht ist.

Gemäß der Erfindung wird diese Aufgabe bei einer Antriebsrolleneinheit der eingangs genannten Gattung dadurch gelöst, daß das erste Motorelement starr und drehfest mit der Basis verbunden ist, und daß der Führungskörper bezüglich der Elektromotoranordnung drehbar gelagert ist.

Bei dieser erfindungsgemäßen Ausgestaltung sind also alle bewegten Teile, die Getriebeanordnung, der Antriebsmotor und die Führungseinrichtung im Inneren der hohlzylindrischen Antriebsrolle untergebracht, so daß alle diese Elemente gegen Verschmutzung und Beschädigung geschützt sind.

Vor allem aber ist vorgesehen, daß das eine Motorelement starr und drehfest mit der Basis verbunden ist. Sofern dieses Motorelement die Feldwicklung des Elektromotors umfaßt, kann also diese Feldwicklung unmittelbar mit der Stromversorgung der Basis verbunden werden, so daß keinerlei Kontaktanordnungen oder aufwendige Schleifringe erforderlich sind. Da im allgemeinen das andere Motorelement, der Anker, als Kurzschlußläufer oder als Permanentmagnetanker ausgebildet ist, benötigt dieses zweite Motorelement keinerlei Stromversorgung.

Durch den Wegfall der Schleifringanordnung ergibt sich eine erhebliche konstruktive Vereinfachung und eine größere Zuverlässigkeit im Betrieb.

Besonders vorteilhaft ist es bei der erfindungsgemäßen Ausgestaltung, daß die gesamte Antriebsrolleneinheit in ihren Außenabmessungen den einzelnen nicht angetriebenen Tragrollen einer Rollenförderbahn angepaßt werden kann und daher in einer Rollenförderbahn an beliebigen Plätzen entsprechend den jeweiligen Anforderungen austauschbar gegen eine Tragrolle eingesetzt werden kann.

Wenn durch Stromzufuhr zu der Elektromotoranordnung die erfindungsgemäße Antriebsrolleneinheit in Betrieb gesetzt wird, wirkt zwischen dem ersten Motorelement und dem zweiten Motorelement der Elektromotoranordnung ein Drehmoment. Da das erste Motorelement starr und drehfest an der Basis befestigt ist, beginnt notwendigerweise sich das zweite Motorelement in Drehung zu versetzen, so daß der Eingang des Planetengetriebes mit einem Drehmoment beaufschlagt wird.

Der eine Ausgang des Planetengetriebes, nämlich der Planetenträger, der mit dem Getrieberad verbunden ist, wird in diesem Zustand mit einem Bremsmoment gehemmt, das beispielsweise durch die Reibung der Getriebeanordnung und die Eigenträgheit der Antriebsrolle gegeben ist. Aus diesem Grunde verharrt das Getrieberad zunächst im Stillstand und der zweite Ausgang des Planetengetriebes, nämlich das fest mit dem Führungskörper verbundene Kronenrad beginnt sich zu drehen, so daß der exzentrische Führungskörper sich um die Drehachse des Getrieberads zu drehen beginnt und dadurch die auf ihm gelagerte Antriebsrolle aus ihrer unteren Ruhestellung in ihre obere Arbeitsstellung bewegt wird, in der sie zur Anlage am Boden eines darüber befindlichen, anzutreibenden Gegenstands gelangt. Der Führungskörper kann sich daher nicht mehr weiterdrehen, so daß das Drehmoment der Elektromotoranordnung nunmehr das Bremsmoment am Getrieberad überwindet und sich dieses zu drehen beginnt. Diese Drehung des Getrieberads wird unmittelbar auf die Antriebsrolle übertragen, so daß sich diese gleichsinnig in Drehung versetzt. Da die Antriebsrolle gegen den Boden des zu fördernden Gegenstands gedrückt ist, wird eine tangentiale Förderkraft auf ihn ausgeübt, so daß er sich in der gewünschten Weise auf die Rollenbahn in Bewegung setzt. Als Reaktionskraft übt der Gegenstand auf die ihn antreibende Antriebsrolle weiterhin ein Bremsmoment aus, das bewirkt, daß der Führungskörper und die auf ihm gelagerte Antriebsrolle weiterhin nach oben in die Arbeitsstellung gegen den Boden des Gegenstands gedrückt werden.

Beim Abschalten der Elektromotoranordnung fällt ihr Antriebsdrehmoment weg, so daß die Antriebsrolle mit ihrer Drehung zum Stillstand kommt und wegen der exzentrischen Massenverteilung zusammen mit dem Führungskörper zurück nach unten in die Ruhestellung schwenkt.

Eine besonders einfache Ausgestaltung ergibt sich, wenn das Sonnenrad des Planetengetriebes als Außenverzahnung der Welle des zweiten Motorelements ausgebildet ist.

Ein besonders kompakter Aufbau mit wenigen Teilen wird erzielt, wenn wenigstens ein Planetenrad des Planetengetriebes sowohl mit dem Sonnenrad als auch mit dem Kronenrad kämmt und das Kronenrad als Innenverzahnung einer im Führungskörper konzentrisch zur Drehachse des Antriebszahnrads geformten Ausnehmung ausgebildet ist.

Für bestimmte Ausführungen kann es bevorzugt sein, daß das mit der Basis starr und drehfest verbundene erste Motorelement das zweite Motorelement konzentrisch umschließt, weil dabei die Abtriebswelle des zweiten Motorelements unmittelbar als Eingangs-Sonnenrad des Planetengetriebes ausgebildet werden kann.

Alternativ hierzu kann es vorteilhaft sein, daß das mit der Basis starr verbundene erste Motorelement konzentrisch innerhalb des zweiten Motorelements angeordnet wird.

Bevorzugt umfaßt das erste Motorelement die Feldwicklung der Elektromotoranordnung und das zweite Motorelement den Anker, so daß die zur Feldwicklung erforderliche Stromversorgung durch feste unbewegliche Leiter ohne aufwendige Kontakt- und Schleifringanordnung erfolgen kann.

Insbesondere wenn auf Gewichtsersparnis ganz besonderes Gewicht gelegt wird und daher die durch das Gewicht gegebene Eigenträgheit der Antriebsrolle gering gehalten wird, kann es vorteilhaft sein, wenn das Antriebszahnrad bezüglich der Basis mit einem vorbestimmten Bremsmoment beaufschlagt ist, das beispielsweise durch eine zwischen dem Antriebszahnrad und der Basis wirkende Bremse geliefert werden kann.

Die Erfindung wird im folgenden beispielsweise unter Bezugnahme auf die Zeichnung näher erläutert; es zeigt:
- Fig. 1: einen stark schematisiert dargestellten vertikalen Längsquerschnitt einer ersten Ausführungsform einer Antriebsrolleneinheit;
- Fig. 2: eine perspektivische Ansicht einer in einer Basis montierten Antriebsrolleneinheit;
- Fig. 3: einen vereinfachten Längsquerschnitt einer praktischen Ausführungsform des ersten Ausführungsbeispiels einer Antriebsrolleneinheit gemäß Fig. 1;
- Fig. 4: einen vertikalen Radialschnitt entlang der Linie I-I der Fig. 3;
- Fig. 5: einen radialen Vertikalschnitt entlang der Linie II-II der Fig. 3;
- Fig. 6: einen radialen Vertikalschnitt entlang der Linie III-III der Fig. 3;
- Fig. 7: einen stark schematisierten vertikalen Axialschnitt einer zweiten Ausführungsform der Antriebsrolleneinheit; und
- Fig. 8: einen vereinfachten vertikalen Axialschnitt einer praktischen Ausführungsform der zweiten Ausführung der Antriebsrolleneinheit gemäß Fig. 7.

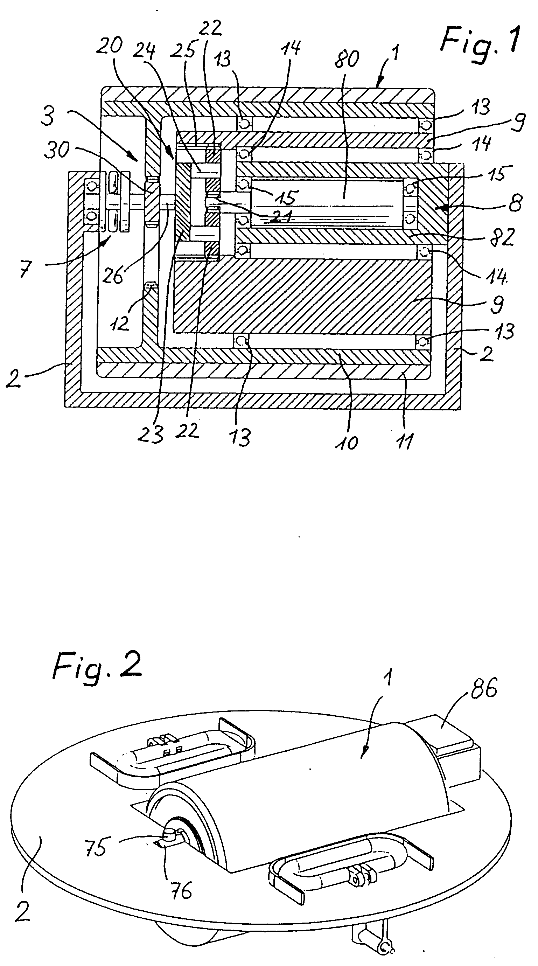

Mit Bezug auf die Fig. 1 wird zunächst der grundsätzliche Aufbau und die Funktionsweise einer ersten Ausführung einer erfindungsgemäßen Antriebsrolleneinheit erläutert. Die Fig. 1 ist zum Zweck der Erläuterung sehr stark vereinfacht und schematisiert.

Wie in der Fig. 1 gezeigt ist, besteht die Antriebsrolleneinheit grundsätzlich aus einer in etwa als hohler Kreiszylinder ausgebildeten Antriebsrolle 1, in deren Innenraum ein Führungskörper 9 und eine Motoranordnung 8 aufgenommen ist, die über ein Planetengetriebe 20 und eine Getriebeanordnung 3 antriebsmäßig mit dem Führungskörper 9 bzw. der Antriebsrolle 1 gekoppelt ist. Die gesamte Antriebsrolleneinheit ist in einer Basis 2 aufgenommen, welche in einer Rollenförderbahn fixiert ist.

Die Elektromotoranordnung 8 umfaßt einen starr und drehfest an der Basis 2 befestigten Stator 82, der die Feldwicklung der Elektromotoranordnung 8 enthält, welche über feste elektrische Leitungen mit der Stromversorgung der Basis 2 verbunden ist. Ferner umfaßt die Elektromotoranordnung 8 einen konzentrisch innerhalb des Stators 82 mittels der Wälzlager 15 drehbar gelagerten Rotor 80, dessen in der Fig. 1 linkes Ende der Rotorwelle mit einer Außenverzahnung versehen ist, die das Sonnenrad 21 eines Planetengetriebes 20 bildet und dieses antreibt. Der Führungskörper 9 besitzt eine im wesentlichen kreiszylindrische Außenoberfäche und eine bezüglich dieser zylindrischen Außenoberfläche exzentrisch angeordnete Durchgangsbohrung, in welcher die Elektromotoranordnung 8 und das Planetengetriebe 20 aufgenommen sind. Der Führungskörper 9 ist mittels Wälzlagern 14 auf der Außenoberfläche des Stators 82 der Elektromotoranordnung 8 drehbar gelagert.

Das Planetengetriebe 21 besitzt mehrere Planetenräder 22, die auf Lagerzapfen 24 eines Planetenträgers 23 drehbar gelagert sind und einerseits mit dem Sonnenrad 21 und andererseits mit einer als Kronenrad 25 ausgebildeten Innenverzahnung der zentrischen Bohrung des Führungskörpers 9 kämmen. Der Planetenträger 23 ist fest mit einer Welle 26 verbunden, die drehfest das Antriebszahnrad 30 der Getriebeanordnung 3 trägt. Das linke Ende der Welle 26 ist in der Basis gelagert und mit einer Bremse 7 gekoppelt, welche die Welle 26 und damit auch das Antriebszahnrad 30 bezüglich der Basis 2 mit einem vorbestimmten Bremsmoment abbremst.

Die Antriebsrolle 1 besteht aus einem inneren, im wesentlichen als Hohlzylinder ausgebildeten Rollenkörper 10 und einem die Außenoberfläche des Rollenkörpers 10 bedeckenden Rollenmantel 11 aus elastischem Material. In der Nähe eines axialen Stirnendes (links in der Fig. 1) ist an der inneren Oberfläche des Rollenkörpers 10 ein Innenzahnkranz 12 geformt, der konzentrisch mit dem Rollenkörper 10 ausgebildet ist und mit dem dazu exzentrischen Antriebszahnrad 30 im kämmenden Eingriff steht. Die Antriebsrolle 1 ist mittels den Lagern 13, die als Nadel- oder Kugellager ausgebildet sind, konzentrisch auf und zu der kreiszylindrischen, bezüglich der Drehachse des Antriebszahnrads 30 exzentrischen Außenoberfläche des Führungskörpers 10 drehbar gelagert, so daß einerseits der kämmende Eingriff des Antriebszahnrads 30 mit dem Innenzahnkranz 12 ständig sichergestellt ist und zugleich die exzentrische Anordnung der Antriebsrolle 1 und des Innenzahnkranzes 12 bezüglich der Drehachse des Antriebszahnrades 30 aufrechterhalten wird.

Die Fig. 1 zeigt die Ruhestellung der Antriebsrolle im abgesenkten Zustand außer Eingriff mit einem auf der zugehörigen Rollenförderbahn ruhenden, zu fördernden Gegenstand (nicht gezeigt).

Wenn nun ausgehend von diesem Ruhezustand die Stromzufuhr zur Elektromotoranordnung 8 eingeschaltet wird, wirkt zwischen dem Rotor 80 und dem Stator 82 wie bei jedem anderen Elektromotor ein Drehmoment. Da der Stator 82 starr und drehfest mit der Basis verbunden ist, beginnt der Rotor 80 sich zu drehen und treibt über das Sonnenrad 21 als Eingang das Planetengetriebe 20 an. Der eine Ausgang des Planetengetriebes, die Welle 26 des Planetenträgers 23 ist starr und drehfest mit dem Getrieberad 30 verbunden, das mit dem Innenzahnkranz 12 der Antriebsrolle 1 kämmt. Wegen der Eigenträgheit der Antriebsrolle und überdies wegen der das Getrieberad 30 bezüglich der Basis abbremsenden Bremse 7 wird eine Drehbewegung der Welle 26 des Planetenträgers zunächst gehemmt, so daß dieser im Stillstand verharrt. Dagegen beginnt der andere Ausgang des Planetengetriebes 20, nämlich das Kronenrad 25 sich zu drehen, und da das Kronenrad 25 fest mit dem Führungskörper 9 verbunden ist, dreht sich dieser Führungskörper 9 gelagert mit den Wälzlagern 14 auf dem Stator 82 um die Drehachse des Antriebszahnrades 30, so daß seine bezüglich dieser Drehachse exzentrische Außenoberfläche und die mittels der Wälzlager 13 auf dieser Außenoberfläche gelagerte Antriebsrolle 1 nach oben in ihre Arbeitsstellung schwenken, bis die Antriebsrolle 1 an der Unterseite des auf der Förderbahn befindlichen, zu fördernden Gegenstands anstößt. Wegen des Gewichts dieses Gegenstands wird die Weiterbewegung der Antriebsrolle nach oben blockiert, so daß sich auch der Führungskörper 9 nicht mehr weiterbewegen kann. Wegen dieser Blockierung des den Führungskörper 9 antreibenden Ausgangs des Planetengetriebes 20 wird nun ein erhöhtes Drehmoment der Elektromotoranordnung auf den anderen Ausgang des Planetengetriebes 20, also an die Welle 26 gelenkt, so daß dieses Drehmoment schließlich die durch die Eigenträgheit der Antriebsrolle und die Bremse 7 herbeigeführte hemmende Bremsmoment überwindet. Dadurch setzt sich das Antriebszahnrad 30 drehend in Bewegung und treibt gleichsinnig über den Innenzahnkranz 12 die Antriebsrolle an. Die dadurch herbeigeführte Drehung der Antriebsrolle, die gegen die Unterseite des zu fördernden Gegenstands angepreßt ist, übt eine Tangentialkraft auf den Gegenstand aus, so daß sich dieser, wie gewünscht, in Bewegung setzt.

Wenn ausgehend von diesem nun erreichten Antriebs-Betriebszustand die Stromzuführung zur Elektromotoranordnung 8 abgeschaltet wird, kommt der Rotor 80 der Elektormotoranordnung bezüglich des mit der Basis starr verbundenen Stators 8 zum Stillstand, so daß das auf die Antriebsrolle von dem Antriebszahnrad 30 ausgeübte Drehmoment wegfällt und auch das den Führungskörper 9 nach oben drehende Antriebsdrehmoment des Kronenrades 25. Wegen der exzentrischen Massenverteilung schwenkt daher der Führungskörper 9 in seine in der Fig. 1 gezeigte Ruhestellung zurück und nimmt bei dieser Schwenkbewegung die Antriebsrolle 1 mit, so daß diese außer Eingriff mit dem Boden des zu fördernden Gegenstands gerät.

Wie in der Fig. 1 gezeigt ist, kann bei der beschriebenen Anordnung eine Bremse 7 vorgesehen sein, die zwischen der Basis 2 und dem Antriebszahnrad 30 ein Bremsmoment wirken läßt. Diese Bremse dient dazu, den anfänglichen Stillstand des Antriebszahnrades 30 beim Einschalten der Stromzufuhr zur Elektromotoranordnung 8 in der Ruhestellung der Antriebsrolle 1 zu unterstützen. Diese Bremse ist zwar nicht unbedingt notwendig, sie sorgt jedoch für ein definiertes Bremsmoment, das auf die Welle 26 des Planetengetriebes 20 einwirkt, so daß das Antriebsmoment des Motors zunächst über das Kronenrad 25 auf den Führungskörper 9 gelenkt wird. Es wird dadurch erreicht, daß die Antriebsrolle 1 mit geringem Gewicht und deshalb auch geringer Eigenträgheit ausgebildet werden kann.

Die wahlweise vorgesehene Bremse 7 ist, wie schematisch angedeutet, als mechanische Rollenreibungsbremse ausgebildet, bei der zwischen zueinander drehbaren Bremsscheiben eine Vielzahl von Bremsrollen federvorgespannt und schräg über den Umfang der Bremsscheiben verteilt angeordnet ist.

Nachstehend wird nun mit Bezug auf die Fig. 2 bis 6 eine in vielen Einzelheiten vereinfacht dargestellte praktische Ausführungsform eines ersten Ausführungsbeispiels der erfindungsgemäßen Antriebsrolleneinheit beschrieben.

Wie die Fig. 2 in perspektivischer Darstellung zeigt, ist die Antriebsrolleneinheit in einer Basis 2 gehaltert, und zwar an dem in der Fig. 2 linken Ende mittels eines einen Lagerzapfen 76 drehfest haltenden Befestigungsbolzens 75 und an dem rechten Ende mittels eines Anschlußgehäuses 86. Die Antriebsrolle 1 ist dabei in einer Aussparung der Basis 2 derart aufgenommen, daß sie sich sowohl drehen als auch von ihrer in der Fig. 2 dargestellten Ruhestellung nach oben in ihre Arbeitsstellung gegen die Unterseite des anzutreibenden Gegenstands schwenken kann.

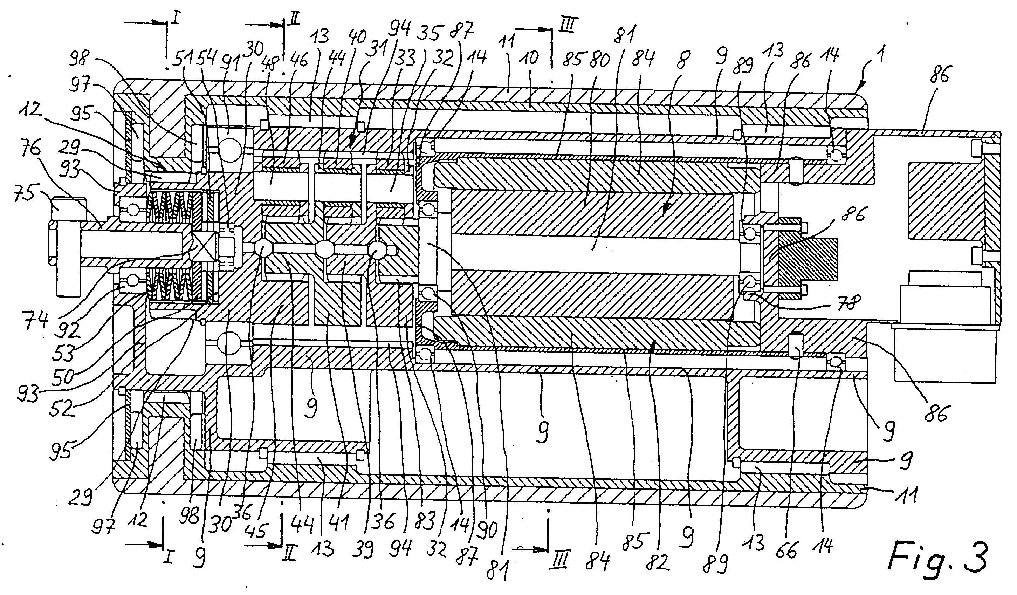

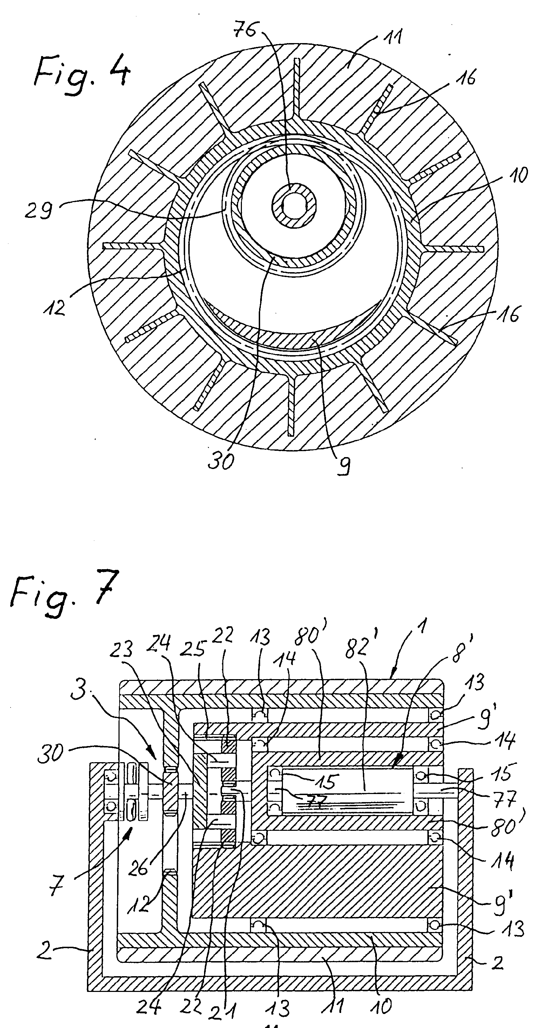

Wie insbesondere in der Fig. 3 und den dieser Figur zugeordneten Radialschnitten der Fig. 4, 5 und 6 gezeigt ist, umfaßt diese Ausführungsform der Antriebsrolleneinheit eine äußere Antriebsrolle 1, die mittels der Wälzlager 13 auf zylindrischen Außenflächenbereichen eines Führungskörpers 9 drehbar gelagert ist. In einer den Führungskörper 9 exzentrisch zu diesen Außenflächenbereichen im Bereich der Wälzlager 13 durchsetzenden Ausnehmung sind eine Elektromotoranordnung 8, ein Planetengetriebe 31, die Getriebeanordnung 3 und eine Bremse 7 aufgenommen.

Die Elektromotoranordnung 8 umfaßt einen Stator 82, der aus einem, die (nicht dargestellte) Feldwicklung der Elektromotoranordnung 8 umfassenden Statorkörper 84 und einem mit diesem fest verbundenen Statorgehäuse 85 besteht, sowie einen konzentrisch innerhalb des Stators 82 drehbar aufgenommenen Rotor 80. Das Statorgehäuse ist an dem in der Fig. 3 rechts gelegenen Ende mittels Stiften 66 fest mit einem Anschlußgehäuse 86 verbunden, das seinerseits im Betrieb fest an der Basis 2 angebracht ist, so daß auch der Stator 82 im Betrieb starr und drehfest mit der Basis 2 (siehe Fig. 2) verbunden ist. Auf der Außenseite des Anschlußgehäuses 86 und angrenzend an das Statorgehäuse 5 ist ein Wälzlager 14 angebracht, sowie ein weiteres Wälzlager 14 auf der Außenseite des in der Fig. 3 links gelegenen Endes des Statorgehäuses 85, wobei auf diesen Wälzlagern 14 der die Motoranordnung 8 umschließende Führungskörper 9 drehbar gelagert ist.

Das Anschlußgehäuse ist als Hohlkörper ausgebildet, der einerseits zur Befestigung an der Basis 2 dient und andererseits zur Stromzuführung zur Feldwicklung des Stators 82 der Elektromotoranordnung 8. Im Inneren dieses Hohlkörpers sind eine Reihe von schematisch angedeuteten Komponenten, wie ein Thermoschutzschalter und ähnliches, sowie beispielsweise ein Anschlußstecker zur Stromverbindung mit der Basis aufgenommen.

Im Inneren des Stators 82 ist der Rotor 80 angeordnet, dessen in der Fig. 3 rechts gelegenes Ende der Rotorwelle 81 mit einem Wälzlager 89 in einem zugeordneten Lageransatz 78 des Anschlußgehäuses drehbar gelagert ist. Das in der Zeichnung links gelegene Ende der Rotorwelle 81 ist mit einem Wälzlager 90 in einem am Statorgehäuse 85 angeformten Lagerflansch 87 drehbar gelagert, so daß sich der Rotor 80 im Betrieb relativ zum Stator 82 und relativ zur Basis 2 drehen kann.

Wie schon erwähnt, ist der die Elektromotoranordnung 8 umhüllende Führungskörper 9 einerseits auf dem Anschlußgehäuse 86 und andererseits auf der Außenseite des Statorgehäuses 85 mittels der Wälzlager 14 drehbar gelagert. Das in der Fig. 3 linke axiale Ende des Führungskörpers 9 ist mit einem radialen Lagerflansch 93 versehen, der den Führungskörper 9 über ein weiteres Wälzlager 92 drehbar auf einem mit dem Befestigungsbolzen 75 fest mit der Basis 2 verbindbaren Lagerzapfen 76 drehbar lagert. Es ist dabei anzumerken, daß die Lager 92 und 14 zueinander konzentrisch sind, jedoch exzentrisch bezüglich der die Wälzlager 13 lagernden zylindrischen Außenumfangsflächen des Führungskörpers 9.

Die Antriebsrolle 1 ist im wesentlichen als hohler Kreiszylinder ausgebildet, der den Führungskörper 9 umgibt. Die Antriebsrolle 1 besteht aus einem Rollenkörper 10 und einem die Außenfläche des Rollenkörpers 10 bedeckenden Rollenmantel 11, der fest mit dem Rollenkörper 10 verbunden ist. Der Rollenmantel besteht aus einem abriebfesten elastischen Kunststoff, während der Rollenkörper 10 aus Metall geformt ist. In der Nähe der beiden axialen Stirnenden des Rollenkörpers 10 ist jeweils an der Innenseite des Rollenkörpers 10 das Wälzlager 13, vorzugsweise ein Nadellager angeordnet, das den Rollenkörper 10 drehbar auf den zylindrischen Umfangsflächen des Führungskörpers 9 lagert. Der an die in der Fig. 3 linke Stirnseite angrenzende Bereich des Rollenkörpers 10 ist mit radial nach innen ragend größerer radialer Dicke ausgestattet, wobei an der Innenfläche dieses Bereichs ein Innenzahnkranz 12 konzentrisch zur Längsachse des hohlzylindrischen Rollenkörpers 10 geformt ist. Wie insbesondere in der zugehörigen Schnittdarstellung der Fig. 4 gezeigt ist, ist der den Innenzahnkranz 12 tragende Bereich des Rollenkörpers zur Gewichtsersparnis mit radialen Rippen 16 ausgebildet. Der den Innenzahnkranz 12 tragende, radial nach innen vorspringende Bereich des Rollenkörpers 10 ist an beiden Seiten mit den Axiallagern 97 bzw. 98 einerseits an einer radialen Schulter des Führungskörpers 9 und andererseits an einer lose gehaltenen Lagerplatte 95 abgestützt, damit für die Antriebsrolle 1 eine bei schrägem Einbau der Antriebsrolleneinheit erforderliche axiale Abstützung gegeben ist.

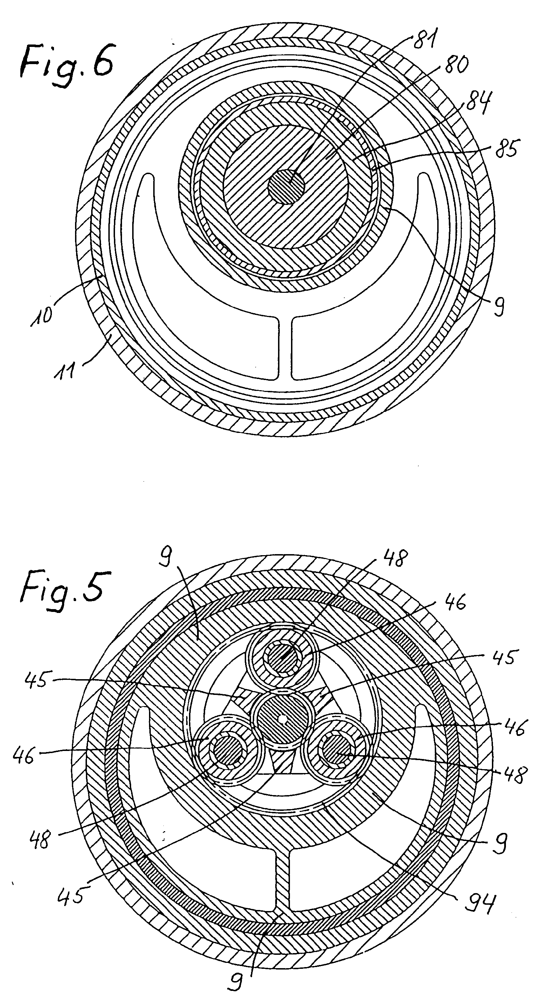

Innerhalb der den Führungskörper 9 durchsetzenden Ausnehmung ist in der Fig. 3 links von dem die Rotorwelle 81 lagernden Lagerflansch 87 ein Planetengetriebe mit drei in Axialrichtung aufeinanderfolgenden Getriebestufen vorgesehen. Dieses Planetengetriebe 31 ist von seiner Funktion her in herkömmlicher Weise aufgebaut, so daß für den Fachmann die kurze nachfolgende Beschreibung genügen wird. Das Planetengetriebe 31 umfaßt in der ersten Stufe einen Planetenträger 32, an dem mittels Lagerzapfen 35 drei Planetenräder 33 gelagert sind, die auf einem Sonnenrad umlaufen, das durch eine Außenverzahnung 83 auf dem linken Ende der Rotorwelle 81 gebildet ist. Die Anordnung und Ausgestaltung dieser ersten Getriebestufe ist vergleichbar mit der in der Fig. 5 gezeigten radialen Schnittdarstellung der dritten Getriebestufe.

Axial nach links in der Fig. 3 ist an dem ersten Planetenträger 32 und einstückig mit diesem das Sonnenrad 39 der zweiten Getriebestufe angeformt, auf dem wiederum die auf Lagerzapfen am Planetenträger 41 gelagerten Planetenräder 40 umlaufen. Am zweiten Planetenträger 41 ist ebenfalls nach links in der Fig. 3 das Sonnenrad 44 einstückig angeformt, auf dem die Planetenräder 46 dieser dritten Getriebestufe umlaufen, die mit Lagerzapfen 48 am Planetenträger 45 drehbar gelagert sind. Jeweils zwischen der linken Stirnfläche eines Sonnenrads und der nach links folgenden zugewandten Fläche des jeweiligen Planetenträgers ist eine Lagerkugel 36 angeordnet, die eine freie und reibungsarme Drehbarkeit dieser benachbarten Teile zueinander gewährleistet. Wie in den Fig. 3 und 5 dargestellt, stehen alle Planetenräder 33, 40 und 45 in kämmendem Eingriff mit einem sie umgebenden Kronenrad, das als Innenverzahnung 94 des Führungskörpers 9 ausgebildet ist. Der in der Fig. 3 nach links ragende Teil des Planetenträgers 45 der dritten Getriebestufe trägt ein Wälzlager 91, auf dem der Führungskörper 9 drehbar gelagert ist und das konzentrisch zu den Wälzlagern 92 und 14 angeordnet ist.

Axial nach links in der Fig. 3 ragend ist an dem Planetenträger 45 der dritten Getriebestufe des Planetengetriebes 31 das Antriebszahnrad 30 entweder einstückig angeformt oder fest mit dem Planetenträger 45 verbunden. Dieses Antriebszahnrad 30 ist als etwa hohlzylindrischer Körper ausgebildet, der eine Außenverzahnung 29 trägt, welche mit dem dazu exzentrischen Innenzahnkranz 12 des Rollenkörpers 10 der Antriebsrolle 1 in kämmendem Eingriff steht.

Im Innenraum des hohlzylindrischen Körpers diese Antriebszahnrades 30 ist eine als mechanische Rollenreibungsbremse ausgestaltet Bremse 7 angeordnet, welche das Antriebszahnrad 30 in definierter Weise und mit vorbestimmtem Bremsmoment gegenüber der Basis 2 abbremst. Wie in der Fig. 3 zu sehen ist, ist das Antriebszahnrad 30 mittels eines Wälzlagers 54 auf dem axial rechten Ende des fest mit der Basis 2 verbundenen Lagerzapfens 76 drehbar gelagert, wobei dieses Wälzlager 54 wiederum konzentrisch mit den den Führungskörper 9 drehbar lagernden Wälzlagern 92, 91 und 14 angeordnet ist.

Die Bremse 7 umfaßt zwei Bremsscheiben 50, 51, wobei die Bremsscheibe 50 drehfest, jedoch axial verschiebbar auf einem Vierkant 74 des Lagerzapfens 76 angeordnet ist, während die zweite Bremsscheibe 51 drehfest mit dem Antriebszahnrad 30 verbunden ist. Zwischen den beiden Bremsscheiben 50, 51 und der nach rechts weisenden Fläche der Bremsscheibe 51 und der benachbarten Wand des Antriebszahnrades 30 ist jeweils eine Vielzahl von umfangsmäßig verteilten Bremsrollen 52 angeordnet. Zwischen der nach links weisenden Fläche der Bremsscheibe 50 und dem an der Basis 2 abgestützten Wälzlager 92 ist eine Anzahl von Tellerfedern 53 angeordnet, welche die Bremsscheibe 50 nach rechts vorspannen, so daß die Bremsrollen 52 zwischen den Bremsscheiben 50, 51 und dem Antriebszahnrad 30 in vorbestimmter Weise eingeklemmt sind, so daß sie bei Drehung der beiden Bremsscheiben 50, 51 relativ zueinander für ein vorbestimmtes Bremsmoment sorgen, das zwischen der Basis 2 und dem Antriebszahnrad 30 wirkt. Eine derartige Rollenreibungsbremse ist an sich nach Funktion und Aufbau bekannt und bedarf daher für den Fachmann keiner weiteren Erläuterungen.

Die Funktionsweise dieses soeben beschriebenen Ausführungsbeispiels wurde bereits ausführlich mit Bezug auf die schematische Darstellung der Fig. 1 erläutert. Wesentlich für die Funktion ist dabei, daß ein Motorelement der Elektromotoranordnung 8 drehfest und starr mit der Basis verbunden ist, während das andere Motorelement den Eingang eines Planetengetriebes antreibt. Die Antriebsrolle 1 ist auf einem Führungskörper 9 drehbar gelagert, der eine bezüglich des Antriebszahnrades exzentrische äußere Oberfläche zur Lagerung der Antriebsrolle 1 aufweist. Dieser Führungskörper 9 ist seinerseits drehbar auf dem äußeren Motorelement der Elektromotoranordnung 8 gelagert und über den einen Ausgang des Planetengetriebes mit der Motoranordnung gekoppelt, während der andere Ausgang des Planetengetriebes das Antriebszahnrad 30 antreibt.

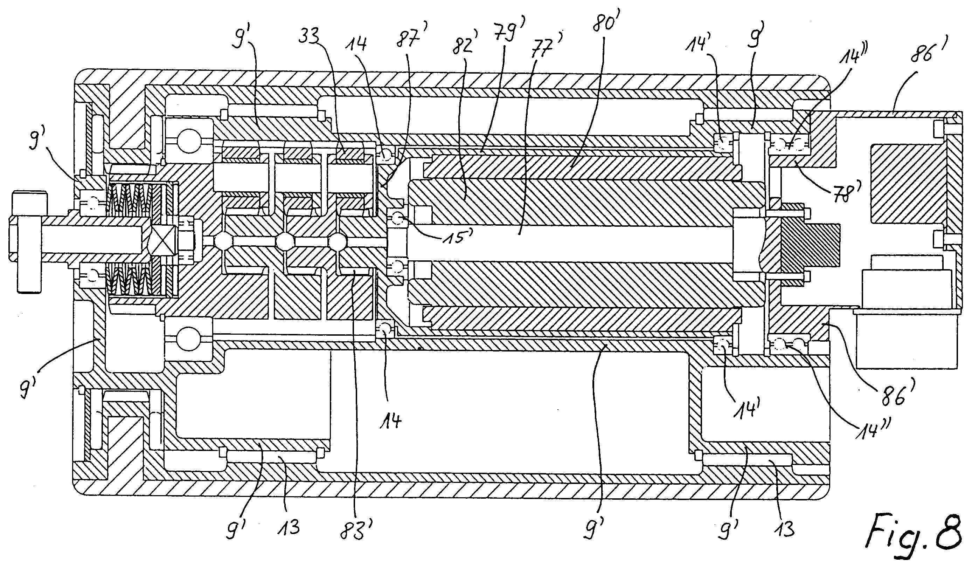

Die in der Fig. 7 sehr vereinfacht und schematisch dargestellte zweite Ausführungsform einer erfindungsgemäßen Rollenantriebseinheit unterscheidet sich von der ersten Ausführungsform gemäß den Fig. 1 bis 6 im wesentlichen ausschließlich nur dadurch, daß das mit der Basis fest und starr verbundene Motorelement nicht wie bei der ersten Ausführungsform außen konzentrisch das innenliegende zweite Motorelement umgibt, sondern vielmehr das erste Motorelement innenliegend angeordnet ist, während das bezüglich der Basis 2 drehbare Motorelement das innere Motorelement konzentrisch umgibt.

In der Fig. 7 sind ebenso wie in der zugehörigen Fig. 8 für Teile, die den entsprechenden Teilen der ersten Ausführungsform entsprechen, die gleichen Bezugszeichen verwendet, während abweichende oder abgewandelte Teile mit Bezugszeichen versehen sind, die durch ein oder mehrere Apostroph ausgezeichnet sind.

Wie in der Fig. 7 dargestellt, ist also bei dieser Ausführungsform der Stator 82' mit seiner Statorwelle 77' drehfest und starr mit der Basis 2 verbunden. Dieser Stator 82' umfaßt die Feldwicklung der Motoranordnung, so daß die Strom zuführung unmittelbar über feste Leitungen von der Basis 2 her erfolgen kann. Der Stator 82' ist außen und konzentrisch zu seiner Welle von dem Rotor 80' umgeben, der mittels der Lager 15 drehbar auf der Statorwelle 77' gelagert ist. Mit dem in der Fig. 7 links liegenden Ende des Rotors 82' ist das Sonnenrad 21 des Planetengetriebes 20 verbunden. Im übrigen ist die Ausführungsform der Fig. 7 identisch mit der Ausführungsform der Fig. 1 ausgebildet. Auch die Funktionsweise ist nahezu identisch: wenn ausgehend von dem in der Zeichnung dargestellten Ruhezustand die Stromzufuhr zur Elektromotoranordnung 8' eingeschaltet wird, wirkt zwischen dem Rotor 80' und dem Stator 82' ein Drehmoment. Da der innenliegende Stator 82' starr und drehfest mit der Basis 2 verbunden ist, beginnt sich der außenliegende Rotor 80' zu drehen und treibt über das Sonnenrad 21 als Eingang das Planetengetriebe 20 an. Wie vorstehend mit Bezug auf die Ausführung der Fig. 1 erläutert, wird dadurch zuerst die Antriebsrolle 1 durch den Führungskörper 9' aus ihrer Ruhestellung in die obere Antriebsstellung geschwenkt und nach Anlage an der Unterseite des zu fördernden Gegenstands beginnt die Antriebsrolle 1 sich zu drehen.

Eine in vielen Einzelheiten vereinfachte praktische Ausführungsform des zweiten Ausführungsbeispiels der erfindungsgemäßen Antriebsrolleneinheit ist in der Fig. 8 dargestellt. Auch hier sind Teile, die von den entsprechenden Teilen der Ausführungsform der Fig. 3 des ersten Ausführungsbeispiels abweichen mit Bezugszeichen mit Apostroph versehen.

Es sollen daher nur einige wenige Einzelheiten zur Erläuterung der Unterschiede des Aufbaus dargestellt werden:

Der innenliegende Stator 82' ist über seine drehfest mit ihm verbundene Statorwelle 77' an dem in der Fig. 8 rechts gelegenen Ende starr mit dem Anschlußgehäuse 86' verbunden, das seinerseits im Betrieb starr und drehfest mit der Basis 2 verbunden ist. Die im Stator 82' enthaltene Feldwicklung der Elektromotoranordnung ist über feste Anschlußleitungen mit der Stromversorgung der Basis 2 verbunden. Der Stator 82' wird konzentrisch von dem Rotor 80' umgeben, der fest mit einem Rotorgehäuse 79' verbunden ist, welches an dem in der Fig. 8 links liegenden Ende einen radialen Lagerflansch 87' besitzt, der über ein Wälzlager 15' auf dem linken Ende der Statorwelle 77' drehbar gelagert ist. Dieser Lagerflansch 87' ist überdies mit einem in der Fig. 8 nach links weisenden axialen Ansatz versehen, der als Sonnenrad der ersten Stufe des Planetengetriebes eine Außenverzahnung 83' trägt. Der Rotor 80' ist über sein Rotorgehäuse 79' am linken Ende mittels der Wälzlager 14 an der Innenseite der Ausnehmung des Führungskörpers 9' gelagert und an seinem rechten Ende mittels der Wälzlager 14' und 14'' ebenfalls an der Innenseite der Ausnehmung des Führungskörpers 9'.

Wie bereits mit Bezug auf die schematische Darstellung der Fig. 7 erläutert, unterscheidet sich somit diese zweite Ausführungsform von der ersten Ausführungsform funktionsmäßig und prinzipiell nur dadurch, daß die Lage des ersten und zweiten Motorelements relativ zueinander vertauscht wurde, also das mit der Basis fest verbundene Motorelement, der Stator 82', bei dieser zweiten Ausführungsform innen gelegen ist.

## Patentansprüche

1. Antriebsrolleneinheit zum Antrieb von Gegenständen auf einer Förderbahn, mit einer von einer Elektromotoranordnung (8) über ein Planetengetriebe (20) und eine Getriebeanordnung (3) drehend antreibbaren Antriebsrolle (1), welche drehbar auf einem Führungskörper (9) gelagert ist, mittels dem sie bezüglich einer Basis (2) zwischen einer unteren Ruhestellung und einer oberen Antriebsstellung, in der sie mit der Unterseite des anzutreibenden Gegenstandes in Fingriff steht, bewegbar ist, wobei das Kronenrad (25) des Planetengetriebes (20) mit dem Führungskörper (9) gekoppelt ist und wobei die Getriebe anordnung (3) ein von der Elektromotoranordnung (8) antreibbares Antriebszahnrad (30) umfaßt, dessen Drehachse (26) bezüglich der Basis (2) ortsfest angeordnet ist, wobei die Abtriebswelle (26) eines Planetenträgers (23) des Planetengetriebes (20) mit dem Antriebszahnrad (30) gekoppelt ist, wobei ferner die Antriebsrolle (1) im wesentlichen als hohler Kreiszylinder ausgebildet ist und die Elektromotoranordnung (8), der Führungskörper (9), das Planetengetriebe (20) und die Getriebeanordnung (3) im Inneren der hohlzylindrischen Antriebsrolle (1) angeordnet sind, wobei der Führungskörper (9) kreiszylindrische Außenumfangsflächenbereiche aufweist, die exzentrisch zur Drehachse (26) des Antriebszahnrades (30) angeordnet sind und auf denen die Antriebsrolle (1) konzentrisch gelagert ist, wobei an der Innenseite der hohlzylindrischen Antriebsrolle (1) ein zu ihr konzentrischer Innenzahnkranz (12) drehfest angebracht ist, welcher mit dem dazu exzentrischen Antriebszahnrad (30) kämmt und von diesem gleichsinnig angetrieben ist, und wobei die Elektromotoranordnung (8) ein erstes und ein zweites Motorelement (80, 82) besitzt, von denen das eine konzentrisch innerhalb des anderen angeordnet ist, die relativ zueinander drehbar sind und zwischen denen im Betrieb das Drehmoment der Elektromotoranordnung (8) wirkt, wobei das zweite Motorelement (80) bezüglich der Basis (2), der Antriebsrolle (1) und des Führungskörpers (9) drehbar gelagert und mit einem Sonnenrad (21) des Planetengetriebes (20) gekoppelt ist, dadurch **gekennzeichnet,** daß das erste Motorelement (82) starr und drehfest mit der Basis (2) verbunden ist und daß der Führungskörper (9) bezüglich der Elektromotoranordnung (8) drehbar gelagert ist.

2. Antriebsrolleneinheit nach Anspruch 1, dadurch **gekennzeichnet,** daß das Sonnenrad als Außenverzahnung (21; 83) der Welle (81) des zweiten Motorelements (80) ausgebildet ist.

3. Antriebsrolleneinheit nach Anspruch 1 oder 2, dadurch **gekennzeichnet,** daß wenigstens ein Planetenrad (22, 33) des Planetengetriebes (20) sowohl mit dem Sonnenrad (21) als auch mit. dem Kronenrad (25) kämmt und daß das Kronenrad (25) als Innenverzahnung (94) einer im Führungskörper (9) konzentrisch zur Drehachse (26) des Antriebszahnrads geformten Ausnehmung ausgebildet ist.

4. Antriebsrolleneinheit nach einem der vorhergehenden Ansprüche, dadurch **gekennzeichnet,** daß das mit der Basis (2) starr und drehfest verbundene erste Motorelement (82) das zweite Motorelement (80) konzentrisch umschließt.

5. Antriebsrolleneinheit nach einem der Ansprüche 1 bis 3, dadurch **gekennzeichnet,** daß das mit der Basis (2) starr verbundene erste Motorelement (82) konzentrisch innerhalb des zweiten Motorelements (80) angeordnet ist.

6. Antriebsrolleneinheit nach einem der vorhergehenden Ansprüche, dadurch **gekennzeichnet,** daß das erste Motorelement (82) die Feldwicklung der Elektromotoranordnung (8) umfaßt und daß das zweite Motorelement (80) den Anker umfaßt.

7. Antriebsrolleneinheit nach einem der vorhergehenden Ansprüche, dadurch **gekennzeichnet,** daß das Antriebszahnrad (30) bezüglich der Basis (2) mit einem vorbestimmten Bremsmoment beaufschlagt ist.

## Claims

1. A drive roller unit for driving articles on a conveyor track, comprising a drive roller (1) which can be driven in rotation by an electric motor means (8) by way of a planetary transmission (20) and a transmission arrangement (3) and which is mounted rotatably on a guide body (9) by means of which it is movable relative to a base (2) between a lower rest position and an upper drive position in which it is in engagement with the underside of the article to be driven, wherein the crown wheel (25) of the planetary transmission (20) is coupled to the guide body (9) and wherein the transmission arrangement (3) includes a drive gear (30) which can be driven by the electric motor means (8) and the axis (26) of rotation of which is arranged stationarily with respect to the base (2), wherein the ouput shaft (26) of a planet wheel carrier (23) of the planetary transmission (20) is coupled to the drive gear (30), wherein moreover the drive roller (1) is substantially in the form of a hollow circular cylinder and the electric motor means (8), the guide body (9), the planetary transmission (20) and the transmission arrangement (3) are arranged in the interior of the hollow cylindrical drive roller (1), wherein the guide body (9) has circular-cylindrical outside peripheral surface regions which are arranged eccentrically with respect to the axis of rotation (26) of the drive gear (30) and on which the drive roller (1) is concentrically mounted, wherein disposed non-rotatably at the inside of the hollow cylindrical drive roller (1) is an internal gear ring (12) which is concentric with eccentric with respect thereto, and is driven by the drive gear in the same direction, and wherein the electric motor means (8) has first and second motor elements (80, 82) of which one is arranged concentrically within the other, which are rotatable relative to each other and between rich the toque of the electric motor means (8) acts in operation of the unit, wherein the second motor element (80) is mounted rotatably with respect to the base (2), the drive roller (1) and the guide body (9) and is coupled to a sun wheel (21) of the planetary transmission (20), characterised in that the first motor element (82) is rigidly and non-rotatably connected to the base (2) and that the guide body ( 9 ) is mounted rotatably with respect to the electric motor means (8).

2. A drive roller unit according to claim 1 characterised in that the sun wheel is in the form of an external tooth configuration (21; 83) on the shaft (81) of the second motor element (80).

3. A drive roller unit according to claim 1 or claim 2 characterised in that at least one planet wheel (22, 33) of the planetary transmission (20) meshes both with the sun wheel (21) and with the crown wheel (25) and that the crown wheel (25) is in the form of an internal tooth configuration (94) in an opening which is formed in the guide body (9) in concentric relationship with the axis of rotation (26) of the drive gear.

4. A drive roller unit according to one of the preceding claims characterised in that the first motor element (82) which is rigidly and non-rotatably connected to the base (2) concentrically encloses the second motor element (80).

5. A drive roller unit according to one of claims 1 to 3 characterised in that the first motor element (82) which is rigidly connected to the base (2) is arranged concentrically within the second motor element (80).

6. A drive roller unit according to one of the preceding claims characterised in that the first motor element (82) includes the field winding of the electric motor means (8) and that the second motor element (80) includes the armature.

7. A drive roller unit according to one of the preceding claims characterised in that the drive gear (30) is subjected, relative to the base (2), to a predetermined braking torque.

## Revendications

1. Unité de rouleau d'entraînement servant à entraîner des objets sur un chemin de transport comportant un rouleau d'entraînement (1) pouvant être entraîné en rotation par un dispositif à moteur électrique (8) par l'intermédiaire d'un engrenage planétaire (20) et d'un dispositif de transmission (3), qui est monté de manière à pouvoir tourner sur un corps de guidage (9), au moyen duquel il peut être déplacé par rapport à une base (2) entre une position inférieure de repos et une position supérieure d'entraînement, dans laquelle il reste en engagement avec la face inférieure de l'objet à entraîner, dans laquelle la roue de chant (25) de l'engrenage planétaire (20) est couplée au corps de guidage (9) et dans laquelle le dispositif de transmission (3) comprend une roue dentée d'entraînement (30), qui peut être entraînée par le dispositif à moteur électrique (8) et dont l'axe de rotation (26) est monté fixe par rapport à la base (2), dans laquelle l'arbre mené (26) d'un porte-satellites (23) de l'engrenage planétaire (20) est couplé avec la roue dentée d'entraînement (30), dans laquelle en outre le rouleau d'entraînement (1) est réalisé essentiellement sous la forme d'un cylindre circulaire creux et le dispositif à moteur électrique (8), le corps de guidage (9), l'engrenage planétaire (20) et le dispositif de transmission (3) sont disposés à l'intérieur du rouleau d'entraînement cylindrique creux (1), dans laquelle le corps de guidage (9) possède sur sa surface périphérique extérieure, des zones cylindriques circulaires, qui sont disposées de façon excentrée par rapport à l'axe de rotation (26) de la roue dentée d'entraînement (30) et sur lesquelles le rouleau d'entraînement (1) est logé concentriquement, dans laquelle du côté intérieur du rouleau d'entraînement cylindrique creux (1) est montée, avec blocage en rotation, une couronne dentée intérieure (12), qui lui est concentrique et engrène avec la roue dentée d'entraînement (30), qui est excentrée par rapport à cette couronne, et est entraînée dans le même sens par cette roue dentée, et dans laquelle le dispositif à moteur électrique (8) possède des premier et second éléments de moteur (80, 82), dont l'un est disposé concentriquement à l'intérieur de l'autre, qui peuvent tourner l'un par rapport à l'autre et entre lesquels agit, en fonctionnement, le couple de rotation du dispositif à moteur électrique (8), dans laquelle le second élément (80) du moteur est logé de manière à pouvoir tourner par rapport à la base (2), au rouleau d'entraînement (1) et au corps de guidage (9), et est couplé à une roue solaire (21) de l'engrenage planétaire (20), caractérisée en ce que le premier élément (82) du moteur est lié rigidement et avec blocage en rotation à la base (2) et que le corps de guidage (9) est monté de manière à pouvoir tourner par rapport au dispositif à moteur électrique (8).

2. Unité de rouleau d'entraînement selon la revendication 1, caractérisée en ce que la roue solaire est constituée sous la forme d'une denture extérieure (21,83) de l'arbre (81) du second élément (80) du moteur.

3. Unité de rouleau d'entraînement selon la revendication 1 ou 2, caractérisée en ce qu'au moins une roue planétaire (22, 23) de l'engrenage planétaire (20) engrène aussi bien avec la roue solaire (21) qu'avec la roue de chant (25), et que la roue de chant (25) est constituée sous la forme d'une denture intérieure (94) d'un évidement ménagé dans le corps de guidage (9) concentriquement par rapport à l'axe de rotation (26) de la roue dentée d'entraînement.

4. Unité de rouleau d'entraînement selon l'une des revendications précédentes, caractérisée en ce que le premier élément (82) du moteur, qui est raccordé rigidement et avec blocage en rotation à la base (2), entoure concentriquement le second élément (80) du moteur.

5. Unité de rouleau d'entraînement selon l'une des revendications 1 à 3, caractérisée en ce que le premier élément (82) du moteur, qui est lié rigidement à la base (2), est disposé concentriquement à l'intérieur du second élément (80) du moteur.

6. Unité de rouleau d'entraînement selon l'une des revendications précédentes, caractérisée en ce que le premier élément (82) du moteur comprend l'enroulement inducteur du dispositif à moteur électrique (8) et que le second élément (80) du moteur comprend l'induit.

7. Unité de rouleau d'entraînement selon l'une des revendications précédentes, caractérisée en ce que la roue dentée d'entraînement (30) est soumise aux effets par rapport à la base (2), d'un couple de freinage prédéterminé.
